Europäisches Patentamt

(19) European Patent Office

Office européen des brevets

(11) Numéro de publication: **0 071 545**
**B1**

(12) # FASCICULE DE BREVET EUROPEEN

(45) Date de publication du fascicule du brevet:
**27.03.85**

(21) Numéro de dépôt: **82420090.1**

(22) Date de dépôt: **05.07.82**

(51) Int. Cl.⁴: **B 23 K 7/02**

(54) Procédé de coupe de pièces métalliques par des jets de gaz émis à la périphérie d'un disque tournant.

(30) Priorité: **10.07.81 FR 8114041**

(43) Date de publication de la demande:
**09.02.83 Bulletin 83/6**

(45) Mention de la délivrance du brevet:
**27.03.85 Bulletin 85/13**

(84) Etats contractants désignés:
**AT BE DE GB IT LU NL SE**

(56) Documents cités:
**FR - A - 886 034**
**US - A - 3 633 787**

(73) Titulaire: **SOMAFER S.A., 41, rue de Ranguevaux,**
**F-57290 Fameck (FR)**

(72) Inventeur: **Donze, Michel, La Flie B.P. 51,**
**F-54460 Liverdun (FR)**
Inventeur: **Rugi, Séverino, Villa La Forestière Ferme de**
**Tréhémont, F-57250 Moyeuvre Grande (FR)**

(74) Mandataire: **Vanlaer, Marcel et al, PECHINEY 28, rue de**
**Bonnel, F-69433 Lyon Cédex 3 (FR)**

## Description

Le développement de l'industrie métallurgique amène à la production en continu de pièces de dimensions importantes, tôles fortes, lingots ou brames. Ces pièces d'épaisseur de l'ordre de 300 mm, ou même 500 mm, sont ensuite découpées par oxycoupage, aux dimensions appropriées à l'utilisation prévue.

Le procédé traditionnel de coupe par oxycoupage consiste à creuser dans la pièce une entaille traversant toute son épaisseur sous l'action d'un jet d'oxygène unique et très puissant, dirigé sensiblement perpendiculairement à la pièce. La buse d'où s'échappe le jet se déplace latéralement en restant à quelques centimètres au-dessus de la surface de la pièce.

Pour que l'entaille traverse toute l'épaisseur de la pièce, le jet d'oxygène doit non seulement brûler le métal, mais également entraîner le métal fondu, les impuretés et les oxydes, ceci sur toute l'épaisseur de la pièce, le long du front de l'entaille. Pour les fortes épaisseurs, on est amené, pour obtenir une coupe rapide, à injecter de l'oxygène en quantité de plus en plus importante et à des vitesses de plus on plus grandes. Pour des épaisseurs de 300 à 500 mm, on est amené à pratiquer dans le métal une entaille atteignant de 10 à 15 mm de largeur de 80 à 150 Nm$^3$/h, avec des buses de diamètre supérieur à 4 mm.

La largeur de cette entaille correspond à une perte de métal importante. Elle entraîne une forte surchauffe et le plus souvent une altération des caractéristiques de métal se trouvant à proximité qui peut obliger à faire un traitement thermique ultérieur.

Parallèlement, le rendement en oxygène est très médiocre. Les molécules se trouvant au centre du jet ne rentrent pas au contact du métal à brûler. Seule leur énergie cinétique est utilisée pour entraîner le métal liquide et les scories. Une part importante de ce métal liquide et de ces scories se solidifie cependant en formant de part et d'autre de l'entaille deux larges cordons durs et adhérents qui peuvent atteindre plusieurs centimètres d'épaisseur et qu'il faut éliminer au burin pneumatique à la meule ou au chalumeau avant laminage. On trouvera dans le brevet français 2 349 387 un exemple de procédé de coupe par oxycoupage de pièces métalliques de forte épaisseur et un exposé des problèmes rencontrés.

Enfin, avec le procédé traditionnel, la vitesse maximale de coupe, c'est-à-dire d'avance de l'entaille dans la pièce ne dépasse guère 12 m/h pour des pièces épaisses.

Tant pour réduire les pertes en métal brûlé ou altéré que pour améliorer le rendement en oxygène consommé, on cherche depuis toujours à réaliser des entailles de largeur aussi faible que possible.

A cet effet, il a été déjà proposé d'effectuer la coupe de pièces métalliques non par la méthode classique au moyen d'un jet d'oxygène de fort débit qui s'échappe d'une buse unique de forte section dirigée perpendiculairement à ladite surface, mais par l'action d'une série de jets d'oxygène de plus faible débit émis par une pluralité de buses de faible section défilant régulièrement et rapidement le long du fond de l'entaille constituant le front de coupe.

Ainsi, le brevet FR 886 034 (LINDE AIR PRODUCTS) décrit en détail un tel procédé. Les jets de gaz de coupe sont émis à la périphérie d'un disque distributeur tournant autour de son axe de révolution. Les jets ont leurs axes dans le plan de symétrie du disque tout en étant inclinés par rapport aux rayons correspondants, c'est-à-dire en faisant chacun un même angle inférieur à 90° avec la tangente au disque tracée de l'intersection de l'axe avec la périphérie du disque. Le brevet LINDE décrit ainsi un dispositif comportant un disque tournant (D), très semblable au disque d'une scie mécanique circulaire dont les dents périphériques seraient remplacées par une série d'orifices (39) ou ajutages (50) d'où s'échappent des jets d'oxygène.

Une buse auxiliaire alimentée en gaz de chauffage permet de préchauffer si besoin le métal au point d'attaque par la série de jets d'oxygène.

Le brevet LINDE préconise d'incliner les jets vers l'amont dans le sens de leur déplacement, ceci selon un angle de 10° à 70° par rapport au fond de l'entaille qui constitue le front de coupe, sensiblement concentrique à la périphérie du disque. LINDE précise que les jets successifs permettent »d'enlever successivement de minces couches de la paroi avant de l'entaille.« LINDE conseille que »les ajutages (50) avancent dans l'entaille à la vitesse à laquelle l'entaille se forme«.

Cette disposition des jets, inclinés en avant dans le sens de leur déplacement par rapport au fond de l'entaille, paraît très naturelle pour toute personne familiarisée avec les techniques d'oxycoupage et de décriquage. Il est toujours préconisé dans ces techniques de faire avancer le bain de fusion en le poussant à l'avant du jet d'oxygène, ceci en évitant avec soin de »perdre le bain« par une avance trop rapide du jet d'oxygène. En dépassant le bain, le jet risque, en effet, de venir au contact de métal encore solide et, donc, à température inférieure à celle nécessaire à la poursuite de la combustion. Ainsi, pour toute personne familiarisée avec les techniques d'oxycoupage ou de décriquage, le procédé de coupe préconisé par LINDE paraît très rationnel. Par analogie avec le fonctionnement d'une scie mécanique, dont chaque dent enlève un copeau et approfondit l'entaille effectuée par la précédente, il semble très rationnel que chaque jet de gaz soit incliné vers l'avant dans le sens de son déplacement pour approfondir le sillon creusé par le jet précédent en poussant devant lui le métal en fusion ainsi que les oxydes, scories et impuretés diverses.

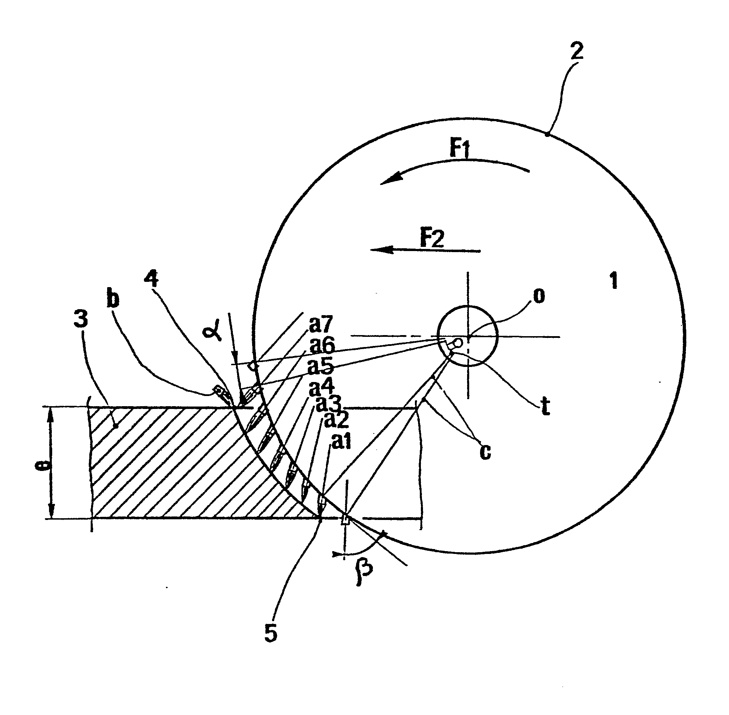

Dans le cas de son dispositif non pas circulaire mais du type à lame rectiligne travaillant en va et vient, soit le dispositif représenté dans sa figure 1, LINDE conseille même de disposer deux jeux d'ajutages inclinés chacun en sens opposé, ceci afin de travailler aussi bien à l'aller qu'au retour avec une série d'ajutages inclinés chaque fois dans la direction d'avance de la lame.

Or, bien que le brevet LINDE ait été demandé en 1939, le procédé d'oxycoupage par une pluralité de jets d'oxygène émis à la périphérie d'un disque distributeur en rotation ne s'est pas développé jusqu'ici.

Les essais que nous avons pu faire selon une technique semblable à celle du brevet LINDE ont été très décevants.

Si l'on ne veut pas utiliser de matériaux trop onéreux ou fragiles, le disque au voisinage du front de l'entaille, les scories refoulées par les jets d'oxygène inclinés dans le sens de rotation du disque arrivent à bloquer périodiquement le disque dans l'entaille, d'où sa détérioration par effet aussi bien mécanique que thermique.

On peut penser que les jets d'oxygène et de gaz de combustion qui repoussent frontalement le métal liquide et les scories sont perturbés par ces obstacles mobiles, qu'ils sont trop fréquemment déviés de leur trajectoire de façon désordonnée. On peut estimer que les déviations angulaires des jets par rapport au plan de symétrie du disque sont de l'ordre de 7° de part et d'autre de ce plan.

L'entaille réalisée dans la pièce métallique est large et évasée à la partie inférieure de la pièce. Les deux flans de l'entaille sont irréguliers. Leur état de surface condamne le procédé. Enfin, au bas de chacun des deux flans, se forme un cordon épais et adhérent de scories qui nécessite également une opération ultérieure de nettoyage au burin pneumatique ou au chalumeau. Nos récents essais ont ainsi confirmé que, même en utilisant la technologie actuelle, le procédé LINDE tel qu'il est décrit dans le FR 886 034, reste sans intérêt pratique.

Avant d'abandonner définitivement ces essais, il est heureusement venu à l'idée de faire tourner le disque en sens inverse de celui préconisé par LINDE, c'est-à-dire dans le sens opposé à celui de l'inclinaison des jets d'oxygène par rapport aux rayons aboutissant respectivement aux orifices d'émission desdits jets, soit dans le sens opposé à la composante tangentielle des jets à leur sortie des buses.

Les pièces de métal étaient attaquées latéralement et, par suite, le fond de l'entaille constituant le front de coupe était sensiblement vertical ou, tout au moins, très incliné par rapport à l'horizontal.

Le disque était disposé par rapport à la pièce à couper, du côté correspondant à une orientation vers le bas des jets se trouvant à proximité de la pièce et devant l'attaquer. Le disque tournait dans le sens faisant se déplacer lesdites buses de bas en haut, soit dans le sens de rotation inverse de la composante tangentielle de vitesse des jets d'oxygène à leur sortie des buses.

La buse des gaz de chauffage était maintenue au niveau de la face supérieure de la pièce, en face du premier point d'attaque de la pièce par les jets défilant successivement à l'avant du disque.

Or, contrairement à ce que l'on pouvait prévoir, la coupe s'est avérée très franche, les deux flans en vis-à-vis de l'entaille étaient nets et régulier. Le cordon de scorier formé au bord inférieur des flans était mince et peu adhérent. La coupe était réalisée rapidement par une entaille de nettement plus faible largeur que précédemment, soit de l'ordre de 10 mm. Cette entaille n'était pas évasée à la partie inférieure de la pièce. La perte en métal était ainsi très réduite, également la consommation d'oxygène. Le métal en fusion et les scories s'écoulaient régulièrement sous l'effet de la gravité et la poussée de l'oxygène, ceci alors que la vitesse relative du gaz par rapport au fond de l'entaille était inférieure à celle que l'on avait précédemment avec l'autre sens de rotation de la roue puisque, dans le cas présent, les vitesses tangentielles du gaz et de la roue se soustraient au lieu de s'additionner. Le débit de gaz était vraisemblablement favorisé puisque l'on avait une dépression et non une surpression au niveau de l'orifice de sortie des buses à oxygène. Apparemment, le débit d'oxygène sortant des buses était surtout plus régulier. Du fait que les buses se déplacent à contre-courant de l'écoulement du métal en fusion et des scories, les jets de gaz ne doivent pas nécessairement repousser à l'avant ce métal et ces scories.

L'invention sera mieux comprise par la description ci-après d'un exemple particulier d'oxycoupage d'une pièce métallique effectué selon le procédé au moyen d'un dispositif à disque réalisé selon le croquis joint.

La figure jointe représente schématiquement un disque (1) d'axe 0, 'épaisseur 8 mm et de diamètre 1,050 mm. Ce disque comporte, dans son épaisseur, 63 conduites radiales (c) se terminant à la périphérie circulaire (2) du disque (1), par 63 orifices en forme de buses ($a_1$, $a_2$, $a_3$ ... $a_{63}$) de diamètre 3,5 mm mesuré au col. Ces 63 buses sont régulièrement espacées à la périphérie (2) du disque (1) à des intervalles ($a$) de l'ordre de 50 mm. Les axes de ces buses ($a_1$, $a_2$, $a_3$ ... $a_{63}$) sont tous dans le plan de symétrie du disque (1) et tous inclinés d'un même sens un même angle ($\beta$) de l'ordre de 15° avec la tangente au disque qui aboutit à leur intersection avec le disque. Au centre du disque est schématisé un distributeur (t) à secteur qui permet d'alimenter simultanément 7 buses (dans le cas de figure $a_1$, $a_2$, $a_3$, $a_4$, $a_5$, $a_6$, $a_7$). On a également schématisé en (b) une buse alimentée en gaz combustible permettant le préchauffage de la partie supérieure d'une pièce métallique (3) représentée en coupe selon le plan de symétrie du disque (1). Ce disque a déjà pénétré dans la pièce (3) selon une entaille dont le fond (4, 5) constitue le front de coupe. On a représenté par la flèche $F_1$ le sens de rotation du disque conseillé par le brevet LINDE et qui, à première vue, paraît le plus logique. La flèche $F_2$ indique le sens d'avance du disque (1) par rapport à la pièce (3).

Sept buses (dans le cas de figure $a_1$, $a_2$, $a_3$, $a_4$, $a_5$, $a_6$, $a_7$), sur un secteur latéral inférieur du disque, étaient alimentées en oxygène par l'intermédiaire des conduites radiales (c) et du distributeur (t), comme représenté sur la figure, ceci avec une pression d'oxygène de l'ordre de 8 atm abs à l'entrée du distributeur (t). Le débit d'oxygène était de l'ordre de 30 $Nm^3$/h/buse.

La buse (b) était alimentèe en gaz de chauffe, oxygène et butane, et son dard allumé.

De nombreux essais de coupe de blooms (3) d'acier ordinaire, d'épaisseur (e) = 200 mm, ont été fait en faisant tourner le disque (1) dans le sens $F_1$ à une vitesse de 10 t/seconde. Le bloom (3) était avancé horizontalement à la rencontre du disque (1), leur déplacement relatif correspondant au sens de la flèche $F_2$ du dessin, l'axe (0) du disque (1) et son distributeur (t) restant au-dessus de la pièce (3). Des essais ont également été faits en attaquant la pièce verticalement par dessus, c'est-à-dire en faisant descendre le disque (1) dans la pièce (3) comme indiqué dans la figure 9 du brevet LINDE.

Dans un cas comme dans l'autre, les résultats ont été très décevants. Dans le cas le plus favorable, celui de la coupe horizontale, l'entaille (4, 5) avait une largeur supérieure à 15 mm avec un large évasement à la partie inférieure et des irrégularités de surface inacceptables. Au bas des deux faces de l'entaille, on avait un fort cordon de scories très adhérentes qui était éliminé avec quelque difficulté au marteau pneumatique. La vitesse d'avance du disque dans le bloom était lente et, par suite, la consommation d'oxygène importante. La perte en métal correspondait à une entaille de largeur 20 mm, plus large que celle réalisée par la méthode traditionnelle.

Par contre, des essais ont été effectués selon l'invention, c'est-à-dire en faisant tourner le disque dans le sens opposé à $F_1$, ceci à la même vitesse de 10 t/seconde. Les résultats ont été très favorables.

La coupe obtenue est franche, de largeur 10 mm seulement, sans évasement à la base. Le cordon de scories formé au bas de chacun des deux flans de la coupe est peu adhérent. Ces cordons ont un volume près de 10 fois moins important que lorsque la coupe était en faisant tourner le disque dans le sens indiqué par LINDE. La vitesse d'avance de la coupe, c'est-à-dire du disque (1) dans la pièce (3) est de l'ordre de 1 m/mn.

On voit sur la figure que, lorsque le disque (1) tourne dans le sens opposé à $F_1$, les buses ($a_1$, $a_2$, $a_3$ ... $a_{63}$) attaquent la pièce (3) par le bas en reculant en quelque sorte par rapport à la composante tangentielle du jet d'oxygène émis en direction du bas.

Les buses ($a_1$, $a_2$, $a_3$ ... $a_{63}$) attaquent la pièce (3) par le bas en remontant en face du front de coupe (4, 5). Lorsque l'on veut couper une pièce (3) froide, il est nécessaire d'alimenter en gaz de chauffage la buse (b) disposée à la partie supérieure de la pièce (3) pour amorcer la combustion du métal à la partie supérieure (4) de l'entaille. Le métal en fusion et les scories chaudes coulent ensuite naturellement par gravité et aussi par poussée des jets successifs d'oxygène orientés vers le bas. Ils entretiennent la combustion tout au long du front (4, 5) de l'entaille. Les jets d'oxygène dirigés vers le bas se déplacent de bas en haut dans l'entaille (4, 5) en quelque sorte à contre-courant du métal liquide et des scories chaudes. Le débit d'oxygène est favorisé étant donné que les orifices des buses ($a_1$, $a_2$, $a_3$ ... $a_{63}$) sont mis en dépression et non en surpression par le sens de rotation du disque. Toutes choses égales par ailleurs, les molécules de gaz ont par rapport au métal liquide et aux scories s'écoulant vers le bas (5) de l'entaille une vitesse moindre que celle qu'elles avaient dans le cas où le disque (1) tournait dans le sens $F_1$ selon le procèdè LINDE. Il n'y a pas, en quelque sorte, de risque d'engorgement par le métal liquide et les scories à la sortie des buses. Le débit de gaz est plus régulier et, donc, la coupe plus régulière.

Lorsque la coupe est amorcée, on peut interrompre l'alimentation en gaz de la buse (b). La combustion du métal se poursuit naturellement du fait que les jets d'oxygène progressent en partant du bas (5) de l'entaille chauffée par le métal en fusion qui s'écoule depuis la partie supérieure (4) de l'entaille.

D'autres essais, très satisfaisants, ont été faits avec un disque de $\varnothing$ 1500 mm, d'épaisseur 6 mm et pourvu à sa périphérie de 183 buses de $\varnothing$ 3 mm. On arrive à une vitesse de coupe de l'ordre de 90 m/h. Le cordon de scories formé sous les deux lèvres de l'entaille a une épaisseur presque négligeable. Enfin, on peut également envisager un disque constitué à la façon d'une roue de turbine par deux flasques réunies par de simples aubages orientant le débit de gaz vers l'arrière par rapport au sens de rotation du disque. Au lieu de jets d'oxygène successifs, on a alors des jets jointifs constituant en quelque sorte une lame continue d'oxygène.

Si l'on doit couper une pièce métallique chaude, par exemple une brame ou une tôle forte provenant d'une installation de coulée continue, la buse de chauffage (b) peut être inutile. Ce sera vraisemblablement l'application la plus intéressante du procédé.

Avec le procédé de coupe suivant l'invention, une coupe peut se poursuivre sans être interrompue par une impureté locale alors que, dans le procédé de coupe traditionnel, un défaut local interrompt souvent la combustion et oblige à une opération de reprise dans un endroit sain.

Le procédé permet de couper sans interruption des pièces métalliques juxtaposées. L'intervalle entre deux pièces peut être de l'ordre de 10 mm sans nécessiter d'opération de reprise, ceci grâce à l'inclinaison et la courbure du front de coupe (4, 5).

Le principe de l'invention peut être aussi utilisé avec d'autres gaz de coupe que l'oxygène, par exemple un gaz à l'état de plasma.

Pour la coupe de pièces froides, la buse (b) de chauffage peut être remplacée par un arc électrique ou une buse à plasma.

**Revendications**

1. Procédé de coupe de pièces métalliques par des jets de gaz tel que l'oxygène émis à la périphérie d'un disque distributeur tournant autour de son axe de révolution, les jets étant dirigés dans le plan de symétrie du disque tout en faisant chacun un angle inférieur à 90° avec la tangente au disque tracée de l'intersection de l'axe du jet avec la périphérie du disque, caractérisé en ce que l'on fait tourner le disque dans le sens opposé à la composante tangentielle des jets.

2. Procédé de coupe selon revendication 1, caractérisé en ce qu'on attaque latéralement la pièce au moyen du disque distributeur par le côté du disque dont les jets sont orientés vers le bas et que l'on fait avancer horizontalement le disque par rapport à la pièce en le faisant tourner dans le sens correspondant à un déplacement de bas en haut des jets disposés vis-à-vis de la pièce.

**Patentansprüche**

1. Verfahren zum Schneiden von Metallstükken durch Strahlen von Gas, wie Sauerstoff, die vom Umfang einer sich um ihre Drehachse drehenden Verteilerscheibe ausgehen, in der Symmetrieebene der Scheibe gerichtet sind und gleichzeitig jeweils einen Winkel unter 90° mit der vom Schnittpunkt der Achse des Strahls mit dem Umfang der Scheibe gezogenen Tangente an der Scheibe bilden, dadurch gekennzeichnet, daß man die Scheibe sich in der zur Tangentialkomponente der Strahlen entgegengesetzten Richtung drehen läßt.

2. Verfahren nach Anspruch 1, dadurch gekennzeichnet, daß man das Stück seitlich mittels der Verteilerscheibe durch die Seite der Scheibe beaufschlagt, deren Strahlen nach unten gerichtet sind, und daß man die Scheibe gegenüber dem Stück horizontal vorrücken läßt, indem man sie sich in der Richtung drehen läßt, die einer Verlagerung der dem Stück zugewandten Strahlen von unten nach oben entspricht.

**Claims**

1. A process for cutting metal members by means of jets of gas such as oxygen emitted at the periphery of a distributor disc rotating about its axis of revolution, the jets being directed in the plane of symmetry of the disc while each being at an angle of less than 90° to the tangent to the disc, which is drawn from the intersection of the axis of the jet with the periphery of the disc, characterised in that the disc is rotated in the opposite direction to the tangential component of the jets.

2. A cutting process according to claim 1 characterised in that the member is attacked laterally by means of the distributor disc, by the side of the disc wheras the jets are oriented downwardly, and that the disc is caused to advance horizontally with respect to the member, while being rotated in the direction corresponding to an upward movement of the jets which are disposed facing the member.

0 071 545